Europäisches Patentamt

European Patent Office

Office européen des brevets

(19)

(11) Veröffentlichungsnummer: **0 178 439 B1**

## (12) EUROPÄISCHE PATENTSCHRIFT

(45) Veröffentlichungstag der Patentschrift: 13.11.91

(21) Anmeldenummer: 85111077.5

(22) Anmeldetag: 03.09.85

(51) Int. Cl.⁵: **B60K 28/02**, B60K 28/00,
G07C 9/00, B60K 31/00,
G07B 9/00, B60Q 1/54

(54) **Verfahren zur Verringerung der Unfallgefahr bei Kraftfahrzeugen.**

(30) Priorität: 19.10.84 DE 3438385

(43) Veröffentlichungstag der Anmeldung:
23.04.86 Patentblatt 86/17

(45) Bekanntmachung des Hinweises auf die
Patenterteilung:
13.11.91 Patentblatt 91/46

(84) Benannte Vertragsstaaten:
**DE FR GB IT SE**

(56) Entgegenhaltungen:
**WO-A-84/03785**
**DE-A- 2 360 604**
**DE-A- 2 911 160**
**DE-A- 3 200 749**
**US-A- 3 754 122**

(73) Patentinhaber: **ANT Nachrichtentechnik GmbH**
**Gerberstrasse 33**
**W-7150 Backnang(DE)**

(72) Erfinder: **Ostermann, Bernd, Dipl.-Ing.**
**Sulzbacher Strasse 51**
**W-7150 Backnang(DE)**

**Beschreibung**

Die vorliegende Erfindung betrifft ein Verfahren zur Verringerung der Unfallgefahr bei Kraftfahrzeugen infolge zu hoher Horizontalbeschleunigungen - insbesondere bei Kurvenfahrten- bei ungeübten Fahrzeuglenkern, wobei zum Starten eines Kraftfahrzeuges ein mit einem elektronisch lesbaren Speichermedium versehener, personenbezogener Ausweis (Führerschein) verwendet wird, der Informationen enthält über die für den Ausweisinhaber zulässige Höchstgeschwindigkeit und diese Informationen einer elektronischen Auswerte- und Steuereinrichtung zur Erzeugung von Steuerinformationen dienen, durch welche die Kraftstoffzufuhr, die Zündanlage, die Bremsanlage, das automatische Getriebe und optische und akustische Warneinrichtungen in der Weise gesteuert werden, daß ein Überschreiten der Höchstgeschwindigkeit verhindert wird.

Ein derartiges Verfahren ist aus der WO-A-84/03785 bekannt. Bei diesem Verfahren wird die Fahrleistung des Fahrzeugs auf einen Wert festgelegt. Eine Anpassung der Fahrleistung an eine verbesserte oder verschlechterte Fahrtüchtigkeit des Fahrzeuglenkers ist dabei nicht vorgesehen.

Es ist eine bekannte Tatsache, daß sehr viele Verkehrsunfälle mit Kraftfahrzeugen passieren, weil die Fahrzeuglenker zu geringe Fahrpraxis besitzen, ihre Fähigkeiten überschätzen, unter Alkoholeinwirkung in ihren Fähigkeiten eingeschränkt sind oder aus "sportlichem Ehrgeiz" sich und das Fahrzeug überfordern.

Aufgrund der genannten Mängel treten zu hohe (Kurven-) Geschwindigkeiten auf oder es müssen Gewaltbremsungen infolge der nicht den Verhältnissen angepaßten Fahrweise durchgeführt werden.

Die Unfallstatistik zeigt, daß insbesondere (jüngere) Führerschein-Neulinge oder Personen, die selten Gelegenheit haben Fahrpraxis zu sammeln, zu Unfallverursachern werden. Diese Erkenntnis führte zu Überlegungen bezüglich eines "Führerscheins auf Probe".

Ein Führerschein auf Probe hat sicherlich einen positiven Einfluß auf das Verhalten von Führerschein-Neulingen. Jedoch schützt auch das Bewußtsein, sich in einer Probezeit zu befinden, nicht vor falscher Einschätzung von Verkehrssituationen und der eigenen Fähigkeit. Das Zurücklegen einer Probezeit allein erbringt noch keine Fahrpraxis, wenn in dieser Zeit keine ausreichende Gelegenheit zum Fahren eines Kraftfahrzeuges besteht. Auch nur ein Toter ist schon zuviel.

Andererseits hält derzeit die Mikroelektronik vehementen Einzug in die Kraftfahrzeuge. So werden beispielsweise Kraftstoffeinspritzung, Bremssysteme (ABS), Service-Intervallanzeigen, Stereoanlagen und Bordcomputer durch Mikrorechner gesteuert.

Der Erfindung liegt die Aufgabe zugrunde, ein Verfahren der eingangs genannten Art anzugeben, bei dem die Fahrleistung sehr flexibel an die Fahrtüchtigkeit des Fahrzeuglenkers, sei es daß sie sich im Laufe der Zeit verbessert oder verschlechtert hat, angepaßt wird. Diese Aufgabe wird durch die Merkmale des Patentanspruchs 1 gelöst.

Grundlage der Überlegungen für eine diesem Ziel dienende technische Anordnung ist, daß sich eine schlechte Fahrweise, die in zu hohen Geschwindigkeiten besteht und zum Ausbrechen oder Schleudern des Fahrzeuges führen kann, aus dem häufigen Auftreten hoher Horizontalbeschleunigungen des Fahrzeuges ableiten läßt. Derartige anormal hohen Horizontalbeschleunigungen können auftreten bei:

- ruckartigem oder scharfem Anfahren,
- hohen Kurvengeschwindigkeiten,
- starken Bremsvorgängen.

Bei einem erfahrenen und besonnenen Fahrer werden sich die Horizontalbeschleunigung im allgemeinen innerhalb bestimmter, ermittelbarer Grenzen bewegen.

Zur Vermeidung kritischer Situationen sollte sich ein unerfahrener Fahrzeuglenker zunächst nur im Bereich geringer Horizontalbeschleunigungen, insbesondere in Kurven, bewegen. Mit zunehmender Fahrpraxis kann dieser Bereich sukzessive erweitert werden.

In gewissem Rahmen kann der Gefahr des Auftretens zu hoher Geschwindigkeiten durch eine Begrenzung des Beschleunigungsvermögens und der möglichen Höchstgeschwindigkeit des Fahrzeuges begegnet werden. Beide Werte können abhängig von Fahrpraxis (selbst gefahrene Kilometeranzahl) und Fahrverhalten (Anzahl der Überschreitungen vorgegebener Horizontalbeschleunigungswerte) erhöht bzw. erniedrigt werden.

Die beschriebene Aufgabe wird folgendermaßen gelöst (siehe Blockschaltbild):
Der Fahrzeuglenker erhält einen sogenannten elektronischen Führerschein (1). Dieser ist ähnlich einer Scheck- oder Kreditkarte, wie sie im Bankenbereich üblich ist, mit einer Magnetspur oder einem Mikrorechner zur Speicherung bzw. Bearbeitung von Daten versehen. Zur Erfüllung der hier beschriebenen Aufgabe werden in dem Speichermedium des elektronischen Führerscheins mindestens folgende Daten gespeichert:

- Ausstellungsdatum des Führerscheins,
- insgesamt als Fahrer zurückgelegte Anzahl der Kilometer,
- dem Fahrer derzeit zugestandene Höchstgeschwindigkeit, Horizontalbeschleunigungswerte für Anfahren, Beschleunigen, Kurven und Bremsen.

Zur besseren Erfassung des Standes der Fahrpraxis kann außerdem die innerhalb beispielsweise des zurückliegenden Jahres selbst gefahrene Anzahl der Kilometer abgespeichert werden. Zweckmäßigerweise wird, insbesondere bei Führerschein-Neulingen, eine getrennte Erfassung der bei Tag bzw. Nacht (oder schlechter Sicht) gefahrenen Kilometer durchgeführt.

Die Ermittlung der im elektronischen Führerschein abzuspeichernden Daten erfolgt mittels folgender z.T. ohnehin bereits im Fahrzeug installierter Sensoren:

° Kilometerzähler (6),
° Datum (letzter Jahresdurchschnitt) (4),
° Beleuchtungsschalter (Tag/Nacht) (9).

Die von diesen Sensoren gelieferten Daten werden einer Auswerte- und Steuereinheit (3) zugeführt, dort verarbeitet und über eine elektronische Lese- und Schreibeinrichtung in das Speichermedium des elektronischen Führerscheins (1) übertragen.

Enthält der elektronische Führerschein selbst einen zur Bearbeitung von Daten geeigneten Mikrorechner, so kann auch dieser die Bewertung oder Teilverarbeitung der Sensordaten übernehmen. Durch das Programm der elektronischen Auswerte- und Steuereinheit (3) und/oder des im elektronischen Führerschein (1) selbst enthaltenen Mikrorechners werden die jeweils dem Fahrer zugestandenen Höchstgeschwindigkeits- und Horizontalbeschleunigungswerte fortlaufend ermittelt und die zuletzt gültigen Werte im Führerschein abgespeichert.

Im Fahrbetrieb sorgt die Auswerte- und Steuereinrichtung unter Einbeziehung der von

° Beschleunigungsmesser (5),
° Geschwindigkeitsmesser (7),
° Drehzahlmesser (8),
° Fahrzeugbeleuchtung (9)
gelieferten Informationen für die Einhaltung der dem Fahrer zugestandenen Fahrwerte. Dazu wirkt die Auswerte- und Steuereinrichtung steuernd auf
° Kraftstoffzufuhr (10),
° Zündanlage (11),
° Bremsanlage (12),
° automatisches Getriebe (13) und
° warnend auf eine optische/akustische Anzeige (14)
ein.

Normalerweise werden mit steigender Fahrpraxis des Fahrers (mehr gefahrene Kilometer bzw. erhöhter Jahresdurchschnitt) die zulässigen Fahrwerte erhöht.

Werden Jedoch die jeweils zugestandenen Horizontalbeschleunigungswerte mehrfach oder deutlich überschritten, so führt dies zu einer erneuten Reduzierung der zugestandenen Fahrwerte und, infolge des Steuermechanismus, zu einer erneuten Begrenzung von Höchstgeschwindigkeit und Beschleunigungsvermögen des Kraftfahrzeuges bei Lenkung durch den die Überschreitungen verursachenden Fahrer.

Eine derartige Reduzierung der möglichen Werte kann nicht nur im Fall eines Führerschein-Neulings, sondern gleichermaßen auch bei langjährigen Führerscheininhabern, z.B. nach unfallbedingtem befristeten Führerscheinentzug, eine sicherheitserhöhende Wirkung erzielen.

Wegen des zu erwartenden positiven Einflußes der Erfindung auf die Unfallwahrscheinlichkeit der Kraftfahrzeuge, die damit ausgerüstet sind und die ohne elektronischen Führerschein nicht gestartet werden können, dürfte, ähnlich den mit ABS ausgerüsteten Fahrzeugen, eine Ermäßigung der Haftpflicht- und Vollkaskoprämien zu erwarten sein. Dadurch könnte die Ausrüstung der Fahrzeuge mit dem elektronischen Führerschein erheblich gefördert werden.

In weiterer Ausgestaltung dieser Erfindung kann der elektronische Führerschein auch gleichzeitig die Funktion des Zündschlüssels/-Schlosses mitübernehmen, indem in dem Speichermedium des Führerscheins eine dem Fahrzeug entsprechende Kennziffer zusätzlich abgespeichert ist. Die durch die elektronische Auswerte- und Steuereinheit (3) festgestellte Identität dieser Kennziffer mit der in (3) abgelegten führt dann zur Freigabe der durch (3) gesteuerten Funktionseinheiten (10) bis (13) des Fahrzeuges.

Nicht-Identität kann dagegen als Hinweis auf einen möglichen Diebstahlversuch gelten und zur optischen und/oder akustischen Alarmauslösung führen.

Weiterhin ermöglicht oder erleichtert eine zusätzlich mögliche Abspeicherung der letzten Werte folgender Sensoren

° Datum/Uhrzeit (4),
° Beschleunigungsmesser (5),
° Geschwindigkeitsmesser (7),
° Fahrzeugbeleuchtung (9)
die Ermittlung von Unfallursachen.

Im Fall allgemeiner Geschwindigkeitsbeschränkung kann die Erfindung dazu dienen, eine Geschwindigkeitsüberschreitung wirksam zu verhindern und damit den Überwachungsaufwand staatlicher Institutionen (Polizei) sowie die Unfallgefährdung beispielsweise innerhalb geschlossener Ortschaften zu verringern. Ebenso läßt sich durch Begrenzung des Beschleunigungsvermögens der Fahrzeuge eine Reduzierung der Fahrzeuggeräusche und damit der Lärmbelästigung z.B. in Wohngegenden erreichen.

Die generelle Begrenzung der möglichen Höchstgeschwindigkeit auf einen gesetzlich festgelegten Wert wird durch Eingabe dieses Höchstwertes in das Speichermedium des elektronischen Führerscheins erreicht.

Eine variable, den Gegebenheiten der Umwelt (z.B. Baustelle, geschlossene Ortschaft, Wohngebiet, Brücken, Tunnels, starkes Gefälle, kurvenreiche Strecke, Glatteis) angepaßte Geschwindigkeits- und/oder Beschleunigungsbegrenzung ist möglich, wenn die zulässigen Grenzwerte jeweils vor Beginn begrenzter Straßenabschnitte durch Impulse von außerhalb des Fahrzeuges im erfindungsgemäßen System selbst aktiviert oder in dieses hinein übertragen werden. Dies kann mittels elektromagnetischer, optischer oder akustischer Übertragungseinrichtungen vom Fahrbahnrand oder der Fahrbahn selbst geschehen. Am Ende der begrenzten Strecke kann in gleicher Weise die Begrenzung aufgegeben oder erweitert werden.

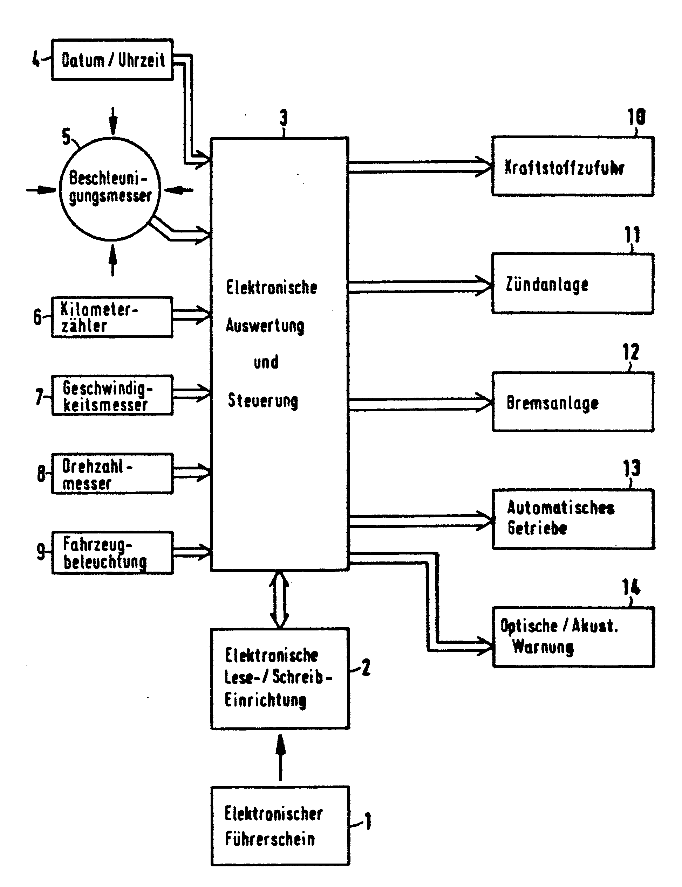

## Patentansprüche

1. Verfahren zur Verringerung der Unfallgefahr bei Kraftfahrzeugen infolge zu hoher Horizontalbeschleunigungen - insbesondere bei Kurvenfahrten - bei ungeübten Fahrzeuglenkern, wobei zum Starten eines Kraftfahrzeuges ein mit einem elektronisch lesbaren Speichermedium versehener, personenbezogener Ausweis (Führerschein) (1) verwendet wird, der Informationen enthält über die für den Ausweisinhaber zulässige Höchstgeschwindigkeit und diese Informationen einer elektronischen Auswerte- und Steuereinrichtung (3) zur Erzeugung von Steuerinformationen dienen, durch welche die Kraftstoffzufuhr (10), die Zündanlage (11), die Bremsanlage (12), das automatische Getriebe (13) und optische und akustische Warneinrichtungen (14) in der Weise gesteuert werden, daß ein Überschreiten der Höchstgeschwindigkeit verhindert wird, dadurch gekennzeichnet,

daß der Ausweis Informationen über die Fahrpraxis und das Fahrverhalten des Ausweisinhabers enthält, wobei diese Informationen mittels der elektronischen Auswerte- und Steuereinrichtung (3) aus Sensoren wie Datengeber (4), Beschleunigungsmesser (5), Kilometerzähler (7), Ein-/Ausschaltungen der Fahrzeugbeleuchtung (9) sowie aus dem Ausstellungsdatum des Ausweises abgeleitet und in die der Fahrpraxis des jeweiligen Fahrzeuglenkers angemessene Höchstgeschwindigkeit umgewertet werden und daß die im Ausweis abgespeicherten Informationen vor, während und nach jeder Fahrt durch die in der Auswerte- und Steuereinrichtung (3) ermittelten Werte ersetzt werden.

2. Verfahren nach Anspruch 1, dadurch gekennzeichnet, daß ein versuchtes Überschreiten der eingespeicherten Grenzwerte optisch und/oder akustisch angezeigt wird.

3. Verfahren nach Anspruch 1 oder 2, dadurch gekennzeichnet, daß ein häufiger Versuch der Überschreitung der eingespeicherten Höchstwerte zu einer zusätzlichen Begrenzung dieser Höchstwerte mittels der Auswerte- und Steuereinrichtungen (3) verwendet wird.

4. Verfahren nach einem der vorhergehenden Ansprüche, dadurch gekennzeichnet, daß der personenbezogene Ausweis (1) gleichzeitig die Funktion des Zündschlüssels und/oder Zündschlosses übernimmt mit Hilfe einer im Speichermedium abgespeicherten fahrzeugbezogenen Kennziffer zur Feststellung der Identität mit der in der Auswerte- und Steuereinheit (3) abgelegten Kennziffer.

5. Verfahren nach Anspruch 4, dadurch gekennzeichnet, daß beim Startversuch mit falscher Kennziffer die Auslösung eines akustischen und/oder optischen Alarms bewirkt wird.

6. Verfahren nach einem der Ansprüche 1 bis 3, dadurch gekennzeichnet, daß durch auf oder neben der Fahrstrecke angeordnete Signalgeber eine Beeinflußung des fahrzeuggebundenen Systems derart erfolgt, daß örtlich unterschiedliche Grenzdaten für die Fahrweise der Auswerte- und Steuereinrichtung (3) zugeführt werden, um die Fahrweise entsprechend zu beeinflußen.

7. Verfahren nach einem der vorhergehenden Ansprüche, dadurch gekennzeichnet, daß die fahrerbezogenen Fahrinformationen während bzw. nach jeder Fahrt im Vergleich mit den jeweils gültigen Höchstwerten über eine elektronische Lese- und/oder Schreibeinrichtung angezeigt werden.

## Claims

1. Method for reducing the risk of accident with motor vehicles in consequence of too great horizontal accelerations, in particular during travels round bends, for inexperienced vehicle drivers, wherein a proof of identity (driver's licence)(1) is used for the starting of a motor vehicle, which proof is related to the person and provided with an electronically readable storage medium and which contains information data about the maximum speed permissible for the proof holder, wherein these information data serve in an electronic evaluation and control equipment (3) for the generation of control information signals, by which the fuel supply (10), the ignition system (11), the braking system (12), the automatic gear (13) and optical and acoustic warning equipments (14) are controlled in such a manner that an exceeding of the maximum speed is prevented, characterised thereby, that the proof contains information data about the driving practice and the driving behaviour of the proof holder, wherein these information are derived by means of the electronic evaluating and control equipment (3) from sensors such as data transmitters (4), accelerometers (5), odometers (7), switchings of the vehicle illumination (9) on or off as well as of the data of issue of the proof and converted into the maximum speed appropriate to the driving practice of the respective vehicle driver and that the information data stored in the proof are replaced before, during and after each journey by. the values determined in the evaluating and control equipment (3).

2. Method according to claim 1, characterised thereby, that an attempted exceeding of the stored limit values is indicated optically and/or acoustically.

3. Method according to claim 1 or 2, characterised thereby, that frequent attempts to exceed the stored maximum values leads to an additional limitation of these maximum values by means of the evaluating and control equipment (3).

4. Method according to one of the preceding claims, characterised thereby, that the proof (1) related to the person at the same time takes over the function of the ignition key and/or the ignition lock with the aid of an identification code, which is related to the vehicle and stored in the storage medium, for ascertaining the identity with the code filed in the evaluating and control equipment (3).

5. Method according to claim 4, characterised thereby, that the initiation of an optical and/or acoustic alarm is caused by an attempt to start with the wrong indentification code.

6. Method according to one of the claims 1 to 3, characterised thereby, that an influencing of the vehicle-bound system by signal transmitters arranged on or beside the driving lane takes place in such a manner that locally different limit data for the manner of driving are fed to the evaluating and control equipment (3) in order correspondingly to influence the manner of driving.

7. Method according to one of the preceding claims, characterised thereby, that the driving information data, which are related to the driver are indicated by way of an electronic reading and/or writing equipment during or after each journey by comparison with the respectively valid maximum values.

**Revendications**

1. Procédé de réduction du risque d'accident de véhicules automobiles à la suite d'accélérations horizontales trop importantes, notamment dans les trajets en virage, dans le cas de conducteurs inexpérimentés, dans lequel on utilise pour le démarrage d'un véhicule automobile une carte personnelle (permis de conduire) (1) qui contient des informations concernant la vitesse maximale admissible pour le titulaire de la carte, et ces informations sont utilisées par un dispositif électronique d'interprétation et de commande (3) pour engendrer des informations de commande par lesquelles l'installation de freinage (12), la boîte de vitesses automatique (13) et des dispositifs avertisseurs optiques et acoustiques (14) sont commandés de manière à éviter un dépassement de la vitesse maximale, caractérisé par le fait que la carte contient des informations concernant l'expérience de conduite et le comportement de conducteur du titulaire de ladite carte, ces informations étant, au moyen du dispositif électronique d'interprétation et commande (3), tirées de capteurs tels que dateur (4), accéléromètre (5), compteur de vitesse (7), allumages/extinctions de l'éclairage (9) du véhicule, ainsi que de la date d'établissement de ladite carte, et étant converties en vitesse maximale adaptée à l'expérience du conducteur concerné, et par le fait que les informations mémorisées dans la carte sont remplacées pendant chaque trajet, et après chaque trajet, par les valeurs élaborées dans le dispositif d'interprétation et commande (3).

2. Procédé selon revendication 1, caractérisé par le fait qu'une tentative de dépassement des valeurs-limites contenues en mémoire est indiquée optiquement et/ou acoustiquement.

3. Procédé selon revendication 1 ou 2, caractérisé par le fait qu'une tentative fréquente de dépassement des valeurs maximales contenues en mémoire donne lieu à une limitation supplémentaire de ces valeurs maximales au moyen des dispositifs d'interprétation et commande (3).

4. Procédé selon l'une des revendications précédentes, caractérisé par le fait que la carte personnelle (1) assume en même temps la fonction de clé de contact et/ou de serrure de contact, à l'aide d'un numéro caractéristique du véhicule, déposé dans le support-mémoire, pour constater l'identité avec le numéro caractéristique contenu dans l'unité d'interprétation et commande (3).

5. Procédé selon revendication 4, caractérisé par le fait qu'une tentative de démarrage avec un numéro caractéristique erroné provoque le déclenchement d'une alarme acoustique et/ou optique.

6. Procédé selon l'une des revendications 1 à 3, caractérisé par le fait que des émetteurs de signaux agencés à côté de la chaussée ou sur celle-ci exercent une influence du système lié au véhicule, de manière telle que des données-limites différentes concernant le mode de conduite soient transmises au dispositif d'interprétation et commande (3) afin d'influencer de manière correspondante le mode de conduite.

7. Procédé selon l'une des revendications précédentes, caractérisé par le fait que, pendant ou après chaque déplacement du véhicule, les informations de conduite relatives au conducteur sont indiquées, comparativement avec les valeurs maximales valables dans chaque cas, par un dispositif électronique de lecture et/ou écriture.